# EUROPEAN PATENT APPLICATION

(11) **EP 3 435 254 A1**
(43) Date of publication of application: **30.01.2019**
(21) Application number: 17769350.4
(22) Date of filing: 15.03.2017
(51) Int. Cl.: G06F 17/30

(54) **DATA DUPLICATION ELIMINATION METHOD AND DEVICE**

(30) Priority: 25.03.2016 CN 201610179982
(71) Applicant: Alibaba Group Holding Limited, Grand Cayman (KY)
(72) Inventor: LI, Xiang, Hangzhou Zhejiang 311121 (CN); ZHANG, Xinming, Hangzhou Zhejiang 311121 (CN)
(74) Representative: Boult Wade Tennant LLP
(86) International application number: PCT/CN2017/076707
(87) International publication number: WO 2017/162073

(57) **Abstract**

The disclosed embodiments provide a method and a device for data deduplication. The method is applied to a system having a plurality of downstream data processing devices. The method comprises: obtaining, by an intermediate device, a unique identifier included in received data; determining, by the intermediate device based on a preset corresponding relationship and the unique identifier in the data, a downstream data processing device to which the data is to be sent; and sending, by the intermediate device, the data to the downstream data processing device to enable the downstream data processing device to deduplicate the data. The disclosed embodiments enable a plurality of downstream data processing devices to deduplicate duplicate data effectively.

## Description

### CROSS-REFERENCE TO RELATED APPLICATIONS

The present application claims priority of Chinese patent application No. 201610179982.4, filed on March 25, 2016 entitled "Method and Device for Data Deduplication" and Int'l Appl. No. PCT/CN2017/076707 filed on Mar. 15, 2017 entitled "Data Duplication Elimination Method and Device," both of which are incorporated herein by reference in their entirety.

### BACKGROUND

### Technical Field

The disclosed embodiments relate to the field of network technology and to a method and a device for data deduplication.

### Description of the Related Art

A large amount of data may be generated when a user engages in network activities; a lot of this generated data, however, is duplicate data. For example, to ensure that data sent from a user can be received by a server, the user may send multiple pieces of the data. In this case, the multiple pieces of the data sent by the user are duplicates. When a lot of duplicate data exists, it not only occupies a large amount of storage space of the server, the duplicate data also occupies too many computing resources of the server. Because the server performs excessive repeated computation, the computing efficiency of the server is lowered.

In current systems, a data deduplication solution is provided to address the above-described problem. Specifically, a deduplication cycle is determined by analyzing a frequency of a user generating duplicate data; and a downstream data processing device deduplicates received data based on the deduplication cycle.

However, current systems have at least the following problem: when a user sends data, multiple pieces of data sent from the same user device may be sent to different downstream data processing devices. A downstream data processing device can only deduplicate data saved in the same device (i.e., the device itself), when performing data deduplication. Although current systems can effectively deduplicate duplicate data in a single downstream data processing device, when multiple pieces of duplicate data are sent from the same user device to different downstream data processing devices, a downstream data processing device cluster cannot effectively deduplicate the multiple pieces of duplicate data.

### SUMMARY

In view of this, the disclosed embodiments provide methods and devices for data deduplication to solve the problem in current systems where a downstream data processing device cluster cannot effectively deduplicate multiple pieces of duplicate data sent from the same user device to different downstream data processing devices.

The disclosed embodiments provide a method of data deduplication, applied to a system having a plurality of downstream data processing devices, the method comprising: obtaining, by an intermediate device, a unique identifier included in received data; determining, by the intermediate device based on a preset corresponding relationship and the unique identifier in the data, a downstream data processing device to which the data is to be sent; and sending, by the intermediate device, the data to the downstream data processing device to enable the downstream data processing device to deduplicate the data.

Unique identifiers included in data from the same source are at least partially identical.

The obtaining, by an intermediate device, a unique identifier included in the data comprises: the intermediate device parsing the data; determining, by the intermediate device, whether content of the parsed data is null; deleting, by the intermediate device, the data if the content of the parsed data is null; and obtaining, by the intermediate device, the unique identifier included in the data if the content of the parsed data is not null.

Further provided is an intermediate device, applied to a system having a plurality of downstream data processing devices, the intermediate device comprising: an obtaining module, configured to obtain a unique identifier included in received data; a determination module, configured to determine a downstream data processing device to which the data is to be sent based on a preset corresponding relationship and the unique identifier in the data; and a sending module, configured to send the data to the downstream data processing device to enable the downstream data processing device to deduplicate the data.

Unique identifiers included in data from the same source are at least partially identical.

The obtaining module is configured to: parse the data; determine whether content of the parsed data is null; delete the data if the content of the parsed data is null; and obtain the unique identifier included in the data if the content of the parsed data is not null.

Further provided is a method of data deduplication, applied to a system having a plurality of downstream data processing devices, the system further comprises an intermediate device, the method comprising: receiving, by a downstream data processing device, data sent from the intermediate device, the data being sent based on a preset corresponding relationship and a unique identifier included in the data; determining, by the downstream data processing device, whether data that is identical to the data exists; and deduplicating, by the downstream data processing device, the data if data that is identical to the data exists.

Unique identifiers included in data from the same source are at least partially identical.

The determining, by the downstream data processing device, whether data that is identical to the data exists comprises: determining, by the downstream data processing device, data obtained in the same deduplication cycle as the data; and determining, by the downstream data processing device, whether data having a unique identifier partially identical to the unique identifier of the data exists in the determined data obtained in the same deduplication cycle as the data;

The deduplicating, by the downstream data processing device, the data comprises: merging, by the downstream data processing device, data having a unique identifier partially identical to the unique identifier of the data with the data, so that only one piece of data having the partially identical unique identifier is kept.

Further provided is a downstream data processing device, applied to a system having a plurality of downstream data processing devices and an intermediate device, the system further comprises the intermediate device, the downstream data processing device comprising: a receiving module, configured to receive data sent from the intermediate device, the data being sent based on a preset corresponding relationship and a unique identifier included in the data; a determination module, configured to determine whether data that is identical to the data exists; and a deduplication module, configured to deduplicate the data if data that is identical to the data exists.

Unique identifiers included in data from the same source are at least partially identical.

The determination module is configured to determine data obtained in the same deduplication cycle as the data; and determine, in the determined data obtained in the same deduplication cycle as the data, whether data having a unique identifier partially identical to the unique identifier of the data exists;

The deduplication module is configured to merge data having a unique identifier partially identical to the unique identifier of the data with the data, so that only one piece of data having the partially identical unique identifier is kept.

In the disclosed embodiments, the downstream data processing device to which the data is to be sent is determined based on the unique identifier included in the obtained data and the preset corresponding relationship. In the disclosed embodiments, by sending data having identical unique identifiers to the same downstream data processing device, one downstream data processing device can deduplicate the sent duplicate data thoroughly. As a result, a downstream data processing device cluster can effectively deduplicate multiple pieces of the sent duplicate data.

### BRIEF DESCRIPTION OF THE DRAWINGS

To illustrate the technical solutions in the disclosed embodiments more clearly, the drawings which need to be used in the description of the embodiments will be introduced briefly in the following description. The drawings described below are merely some disclosed embodiments, and those of ordinary skill in the art may still derive other drawings from these drawings without creative efforts.
FIG. 1 is a diagram of a data deduplication process.
FIG. 2 is a flow diagram of a method of data deduplication according to some embodiments of the disclosure.
FIG. 3 is a flow diagram of a data deduplication method according to some embodiments of the disclosure.
FIG. 4 is a diagram of a data deduplication process according to some embodiments of the disclosure.
FIG. 5 is a block diagram of an intermediate device according to some embodiments of the disclosure.
FIG. 6 is a block diagram of a downstream data processing device according to some embodiments of the disclosure.

### DETAILED DESCRIPTION

To make the purposes, technical schemes, and advantages of the disclosed embodiments clearer, the technical solutions in the disclosed embodiments will be described clearly and completely below with reference to the drawings in the disclosed embodiments. The described embodiments are merely some, rather than all the embodiments, of the disclosure. Based on the disclosed embodiments, all other embodiments obtained by those of ordinary skill in the art without making creative efforts shall fall within the scope of the disclosure.

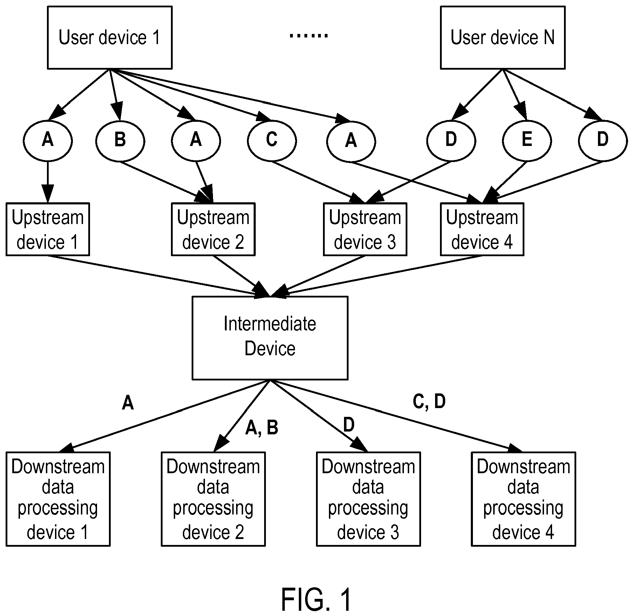

A user device may randomly send data to any upstream device. Then the data is sent to a downstream data processing device through an intermediate device for data deduplication. Specifically, as shown in FIG. 1, a user device 1 sends three pieces of data A to downstream data processing devices. The downstream data processing devices that have received the data A include a downstream data processing device 1 and a downstream data processing device 2. The downstream data processing device 1 receives two pieces of data A whereas the downstream data processing device 2 receives one piece of data A. Using current solutions, the downstream data processing device 1 can effectively deduplicate the data A received by the downstream data processing device 1 itself; but a server may still receive two pieces of data A in the end. A downstream data processing device cluster cannot effectively deduplicate multiple pieces of duplicate data. The same problem exists for duplicate data sent from other user terminals in FIG. 1.

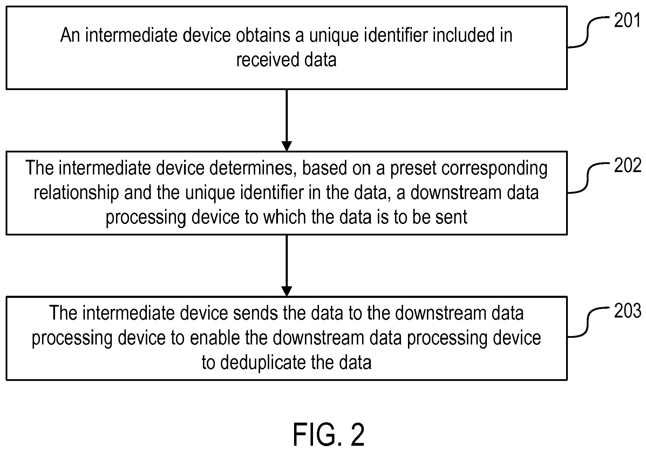

To solve the above-mentioned problem, the disclosed embodiments provide methods of data deduplication. Specifically, as shown in FIG. 2, the method is applied to a system having a plurality of downstream data processing devices. The method comprises the following steps.

Step 201: an intermediate device obtains a unique identifier included in received data.

Unique identifiers included in data from the same source are at least partially identical.

Specifically, a unique identifier of data may comprise a unique identifier of a user device that sends the data, such as Media Access Control (MAC) information. The unique identifier of the data may also be other unique identifiers of the user device and other information. The other information may be either identical or different. In this way, it can be ensured that at least part of the identifiers in the data sent by the same user device are identical; and identical data sent by the same user at least has identifiers that are partially identical. Moreover, the unique identifier of the data may also be distributed for the data according to content of the data. Herein, unique identifiers distributed for identical data are at least partially identical. An identification method for the unique identifier of the data may be determined according to actual conditions. However, any identification method that can determine identical data according to the unique identifier falls within the scope of the disclosure.

The intermediate device may specifically be a data distribution device.

In one embodiment obtaining, by an intermediate device, a unique identifier included in the data comprises: parsing the data; determining, by the intermediate device, whether content of the parsed data is null; deleting, by the intermediate device, the data if the content of the parsed data is null; and obtaining, by the intermediate device, the unique identifier included in the data if the content of the parsed data is not null.

Specifically, the data is valid data only when the content of the data is not null. The computing resources of a data processing device are only reasonably utilized when valid data is processed. When the content of the data is null, the data is invalid data and needs to be deleted by the intermediate device, thereby avoiding wasting computing resources of the downstream data processing device.

Step 202: the intermediate device determines, based on a preset corresponding relationship and the unique identifier in the data, a downstream data processing device to which the data is to be sent.

Specifically, because the downstream data processing device is determined based on the preset corresponding relationship and the unique identifier in the data, it is ensured that data having partially or fully identical unique identifiers is sent to the same downstream data processing device.

In one embodiment, the preset corresponding relationship is a corresponding relationship between an identical identifier portion of the unique identifier included in the data and a unique identifier of the downstream data processing device.

The establishment of the preset corresponding relationship comprises: when the downstream data processing device performs data deduplication according to the locations of the data, corresponding relationships between unique identifiers of data from different sources and the unique identifier of the downstream data processing device are pre-established based on the locations of the data; when the downstream data processing device performs data deduplication according to a load balancing principle, the corresponding relationships between unique identifiers of data from different sources and the unique identifier of the downstream data processing device are pre-established according to the data corresponding to each of the downstream data processing devices; and when the downstream data processing device performs data deduplication according to a type of the data, the corresponding relationships between unique identifiers of data from different sources and the unique identifier of the downstream data processing device are pre-established based on the types of the data.

Specifically, when a plurality of downstream data processing devices simultaneously process data forwarded from the intermediate device, to ensure that identical data is sent to the same downstream data processing device, corresponding relationships between unique identifiers of data from different sources and unique identifiers of the downstream data processing devices are pre-established. Moreover, when the plurality of downstream data processing devices jointly processes the data forwarded from the intermediate device, to ensure a higher processing efficiency of a downstream data processing device cluster, the data needs to be divided according to a division rule, so that each of the downstream data processing devices can process part of the data forwarded from the intermediate device. Herein, the division rule comprises: division based on locations of data, division based on load balancing principle, and division based on types of data. For example, when the data is divided according to the location thereof and the downstream data processing device 1 is responsible for processing data in Beijing area, if sent data belongs to Beijing area (i.e., the user device that sends the data belongs to Beijing area), then unique identifiers of data from different sources in Beijing area and the unique identifier of the downstream data processing device 1 are determined to be in corresponding relationships. When the division is performed based on the load balancing principle for the downstream data processing devices, each of the downstream data processing devices needs to process data having an identical number of identifiers. At this point, if it is needed to allocate data having a certain identifier to the downstream data processing device 1, then the unique identifier of the data sent from the device and the unique identifier of the downstream data processing device 1 are determined to be in a corresponding relationship. Certainly, when the division is performed based on the load balancing principle for the downstream data processing devices, load balancing may also be performed according to the number of user devices processed by the downstream data processing devices. The downstream data processing devices process data sent from the same number of user devices. The purpose of the disclosed embodiments is to allow the downstream data processing devices to process data in a load balancing manner. Therefore, all allocation manners based on load balancing fall within the scope of the disclosure. When the division is performed according to types of data (the types may be divided into the type of data sent from a fixed device and the type of data sent from a mobile device, and may also be divided into types of data sent from different operating systems and the like), if the downstream data processing device 1 processes data sent through an ANDROID system, then unique identifiers of data sent through the ANDROID system from different sources and the unique identifier of the downstream data processing device 1 are determined to be in corresponding relationships. Of course, other division rules may also be included. The purpose of the disclosed embodiments is to provide a faster data processing speed. Therefore, all division rules that can increase the data processing speed fall within the scope of the disclosure.

Step 203: the intermediate device sends the data to the downstream data processing device to enable the downstream data processing device to deduplicate the data.

Specifically, duplicate data is more likely to be generated within a certain period, the certain period can then be the deduplication cycle. When the downstream data processing device deduplicates the data, the downstream data processing device needs to determine the data obtained in the same deduplication cycle. For example, if the deduplication cycle is 5 minutes and when the downstream data processing device obtains the data sent from the intermediate device, the downstream data processing device obtains other data in the most recent 5 minutes. The deduplication cycle may, of course, also be 1 minute, 3 minutes, 10 minutes, etc. The specific deduplication cycle may be determined according to actual situations. After data that belongs to the same deduplication cycle is determined, the downstream data processing device screens and selects data having an identical unique identifier. If the unique identifier of the data is the unique identifier of the user device, then all the data sent from the same user device will be allocated to the same downstream data processing device. At this point, the selected data includes all the data sent from the same user device within one deduplication cycle. Then the downstream data processing device determines whether identical data exists in the selected data. If identical data exists in the selected data, a deduplication operation is performed. When the deduplication operation is performed, the downstream data processing device merges the data having the identical unique identifier, so that only one piece of data having the identical unique identifier is kept. If the unique identifier of the data is allocated according to different data (i.e., identical data is allocated with identical unique identifiers and different data is allocated with different unique identifiers), then unique identifiers for different data sent from the same user device would also be different. Different data sent from the same user device might be allocated to different downstream data processing devices. At this point, it is necessary to screen and select all the data sent within the same deduplication cycle. Then, it is determined, from the data obtained within the same deduplication cycle as the data, whether data having a unique identifier identical to that of the data exists. That is, whether data having identical unique identifiers exists in the same deduplication cycle is determined. If data having identical unique identifiers exists in the same deduplication cycle, it means that identical data exists in the downstream data processing device; and the deduplication operation needs to be performed. When the deduplication operation is performed, the downstream data processing device merges the data having the identical unique identifiers, so that only one piece of data having the identical unique identifier is kept.

In the disclosed embodiments, the downstream data processing device to which the data is to be sent is determined based on the unique identifier included in the obtained data and the preset corresponding relationship. In the disclosed embodiments, by sending data having identical unique identifiers to the same downstream data processing device, one downstream data processing device can deduplicate the sent duplicate data thoroughly. As a result, a downstream data processing device cluster can effectively deduplicate multiple pieces of the sent duplicate data.

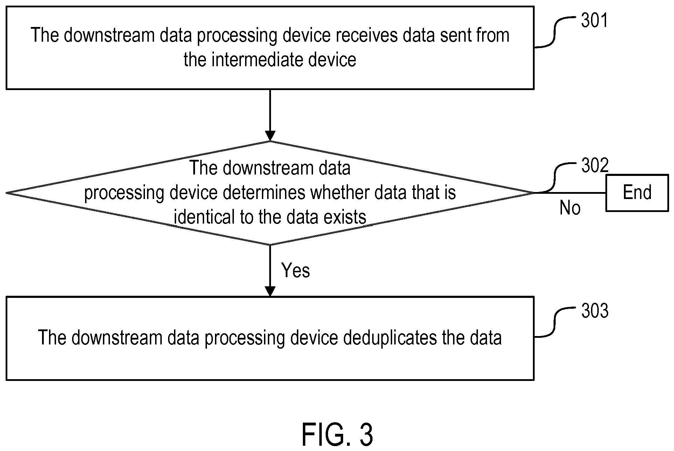

The disclosed embodiments further propose a method of data deduplication. Specifically, as shown in FIG. 3, the method is applied to a system having a plurality of downstream data processing devices. The system further includes an intermediate device. The method comprises the following steps.

Step 301, a downstream data processing device receives data sent from the intermediate device, the data being sent based on a preset corresponding relationship and a unique identifier included in the data.

Step 302, the downstream data processing device determines whether data that is identical to the data exists. If data that is identical to the data exists, step 303 is executed. If data that is identical to the data does not exist, the process is ended.

Step 303, the downstream data processing device deduplicates the data.

Unique identifiers included in data from the same source are at least partially identical.

The determining, by the downstream data processing device, whether data that is identical to the data exists comprises: retrieving, by the downstream data processing device, data obtained in the same deduplication cycle as the data; and determining, by the downstream data processing device, whether data having a unique identifier partially identical to the unique identifier of the data exists in the determined data obtained in the same deduplication cycle as the data.

The deduplicating, by the downstream data processing device, the data comprises: merging, by the downstream data processing device, data having a unique identifier partially identical to the unique identifier of the data with the data, so that only one piece of data having the partially identical unique identifier is kept.

The specific data deduplication process has been described in detail in the method described above, and will not be repeated herein again but is incorporated herein by reference in its entirety.

In the disclosed embodiments, the downstream data processing device to which the data is to be sent is determined based on the unique identifier included in the obtained data and the preset corresponding relationship. In the disclosed embodiments, by sending data having identical unique identifiers to the same downstream data processing device, one downstream data processing device can deduplicate the sent duplicate data thoroughly. As a result, a downstream data processing device cluster can effectively deduplicate multiple pieces of the sent duplicate data.

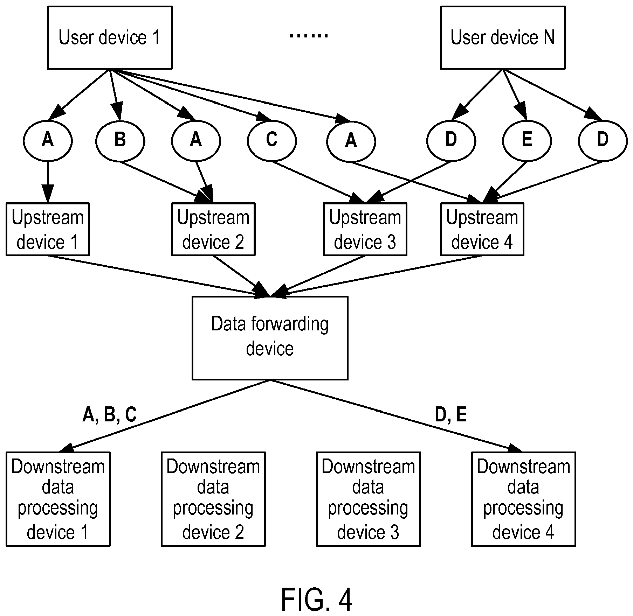

To further illustrate the technical concept of the disclosure, the disclosed embodiments are now described in combination with a specific example. Specifically, as shown in FIG. 4, the unique identifier of the data is a unique identifier of a user device, such as MAC information. The pre-established corresponding relationship is: a downstream data processing device corresponding to MAC information of a user device 1 is the downstream data processing device 1. The specific steps are as follows.
1. When receiving data forwarded from an upstream device, a data forwarding device obtains MAC information in the data, wherein the data is sent from the user device 1. At this point, the MAC information is the MAC information of the user device 1;
2. The data forwarding device determines, based on the MAC information and the corresponding relationship, the downstream data processing device to which the data is to be sent as the downstream data processing device 1;
3. The data forwarding device forwards the data to the downstream data processing device 1;
4. The downstream data processing device 1 determines data obtained within the same deduplication cycle as the data;
5. The downstream data processing device 1 determines, in the determined data obtained within the same deduplication cycle as the data, data having a unique identifier that is identical to that of the data;
6. The downstream data processing device 1 determines whether identical data exists in the determined data having a unique identifier that is identical to that of the data; and
7. If identical data exists in the determined data having a unique identifier that is identical to that of the data, the downstream data processing device 1 merges data having the identical unique identifier, so that only one piece of data having the identical unique identifier is kept. Only one piece of data is kept in the downstream data processing device 1.

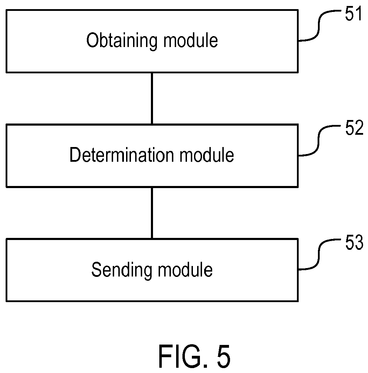

Based on the same application concept as the method described above, the disclosed embodiments provide an intermediate device. As shown in FIG. 5, the intermediate device is applied to a system having a plurality of downstream data processing devices, the intermediate device comprising: an obtaining module 51, configured to obtain a unique identifier included in received data; a determination module 52, configured to determine a downstream data processing device to which the data is to be sent based on a preset corresponding relationship and the unique identifier in the data; and a sending module 53, configured to send the data to the downstream data processing device to enable the downstream data processing device to deduplicate the data.

Unique identifiers included in data from the same source are at least partially identical.

The obtaining module is configured to: parse the data; determine whether content of the parsed data is null; delete the data if the content of the parsed data is null; and obtain the unique identifier included in the data if the content of the parsed data is not null.

The specific data deduplication process has been described in detail in the method described above, and will not be repeated herein again but is incorporated herein by reference in its entirety.

In the disclosed embodiments, the downstream data processing device to which the data is to be sent is determined based on the unique identifier included in the obtained data and the preset corresponding relationship. In the disclosed embodiments, by sending data having identical unique identifiers to the same downstream data processing device, one downstream data processing device can deduplicate the sent duplicate data thoroughly. As a result, a downstream data processing device cluster can effectively deduplicate multiple pieces of the sent duplicate data.

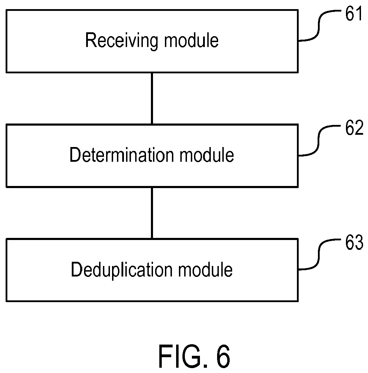

Based on the same application concept as the method described above, the disclosed embodiments further provide a downstream data processing device. Specifically, as shown in FIG. 6, the downstream data processing device is applied to a system having a plurality of downstream data processing devices and an intermediate device, the system further comprises the intermediate device, the downstream data processing device comprising: a receiving module 61, configured to receive data sent from the intermediate device, the data being sent based on a preset corresponding relationship and a unique identifier included in the data; a determination module 62, configured to determine whether data that is identical to the data exists; and a deduplication module 63, configured to deduplicate the data if data that is identical to the data exists.

Unique identifiers included in data from the same source are at least partially identical.

The determination module is configured to: determine data obtained in the same deduplication cycle as the data; and determine whether data having a unique identifier partially identical to the unique identifier of the data exists in the determined data obtained in the same deduplication cycle as the data;

The deduplication module is configured to: merge data having a unique identifier partially identical to the unique identifier of the data with the data, so that only one piece of data having the partially identical unique identifier is kept.

The specific data deduplication process has been described in detail in the method described above, and will not be repeated herein again but is incorporated herein by reference in its entirety.

In the disclosed embodiments, the downstream data processing device to which the data is to be sent is determined based on the unique identifier included in the obtained data and the preset corresponding relationship. In the disclosed embodiments, by sending data having identical unique identifiers to the same downstream data processing device, one downstream data processing device can deduplicate the sent duplicate data thoroughly. As a result, a downstream data processing device cluster can effectively deduplicate multiple pieces of the sent duplicate data.

Those skilled in the art can understand that all or part of the steps for implementing the method in above embodiments can be accomplished by hardware related to program instructions. The program may be stored in a computer-readable storage medium. In execution, the program executes the steps of the method in the above embodiments, and the foregoing storage medium includes various medium that can store program codes, such as a ROM, a RAM, a magnetic disk, or an optical disc.

The apparatus embodiment described above is merely exemplary. The units described as separate parts may or may not be physically separated; and the components shown as units may or may not be physical units. That is, the components may be in one place or may be distributed onto at least two network units. The objective of the solution of this embodiment may be implemented by selecting a part of or all the modules according to actual requirements. Those of ordinary skill in the art could understand and implement the disclosed embodiments without creative efforts.

It should be finally noted that the above embodiments are merely used for illustrating rather than limiting the technical solutions provided by the disclosed embodiments. Although the disclosure is described in detail with reference to the foregoing embodiments, those of ordinary skill in the art should understand that the technical solutions recorded in the foregoing embodiments may still be modified or equivalent replacement may be made on part or all the technical features therein. These modifications or replacements will not make the essence of the corresponding technical solutions be departed from the scope of the technical solutions in the disclosed embodiments.

## Claims

1. A method of data deduplication, applied to a system having a plurality of downstream data processing devices, the method comprising:
obtaining, by an intermediate device, a unique identifier included in received data;
determining, by the intermediate device based on a preset corresponding relationship and the unique identifier in the data, a downstream data processing device to which the data is to be sent; and
sending, by the intermediate device, the data to the downstream data processing device to enable the downstream data processing device to deduplicate the data.

2. The method according to claim 1, wherein unique identifiers included in data from the same source are at least partially identical.

3. The method according to claim 1, wherein the obtaining, by an intermediate device, a unique identifier included in the data comprises:
the intermediate device parsing the data;
determining, by the intermediate device, whether content of the parsed data is null;
deleting, by the intermediate device, the data if the content of the parsed data is null; and
obtaining, by the intermediate device, the unique identifier included in the data if the content of the parsed data is not null.

4. An intermediate device, applied to a system having a plurality of downstream data processing devices, the intermediate device comprising:
an obtaining module, configured to obtain a unique identifier included in received data;
a determination module, configured to determine a downstream data processing device to which the data is to be sent based on a preset corresponding relationship and the unique identifier in the data; and
a sending module, configured to send the data to the downstream data processing device to enable the downstream data processing device to deduplicate the data.

5. The intermediate device according to claim 4, wherein unique identifiers included in data from the same source are at least partially identical.

6. The intermediate device according to claim 4, wherein the obtaining module is configured to:
parse the data;
determine whether content of the parsed data is null;
delete the data if the content of the parsed data is null: and
obtain the unique identifier included in the data if the content of the parsed data is not null.

7. A method of data deduplication, applied to a system having a plurality of downstream data processing devices, the system further comprises an intermediate device, the method comprising:
receiving, by a downstream data processing device, data sent from the intermediate device, the data being sent based on a preset corresponding relationship and a unique identifier included in the data;
determining, by the downstream data processing device, whether data that is identical to the data exists; and
deduplicating, by the downstream data processing device, the data if data that is identical to the data exists.

8. The method according to claim 7, wherein unique identifiers included in data from the same source are at least partially identical.

9. The method according to claim 7, wherein the determining, by the downstream data processing device, whether data that is identical to the data exists comprises:
determining, by the downstream data processing device, data obtained in the same deduplication cycle as the data; and
determining, by the downstream data processing device, in the determined data obtained in the same deduplication cycle as the data, whether data having a unique identifier partially identical to the unique identifier of the data exists;
the deduplicating, by the downstream data processing device, the data comprises:
merging, by the downstream data processing device, data having a unique identifier partially identical to the unique identifier of the data with the data, so that only one piece of data having the partially identical unique identifier is kept.

10. A downstream data processing device, applied to a system having a plurality of downstream data processing devices and an intermediate device, the system further comprises the intermediate device, the downstream data processing device comprising:
a receiving module, configured to receive data sent from the intermediate device, the data being sent based on a preset corresponding relationship and a unique identifier included in the data;
a determination module, configured to determine whether data that is identical to the data exists; and
a deduplication module, configured to deduplicate the data if data that is identical to the data exists.

11. The downstream data processing device according to claim 10, wherein unique identifiers included in data from the same source are at least partially identical.

12. The downstream data processing device according to claim 10, wherein the determination module is configured to:
determine data obtained in the same deduplication cycle as the data; and
determine, in the determined data obtained in the same deduplication cycle as the data, whether data having a unique identifier partially identical to the unique identifier of the data exists;
the deduplication module is configured to:
merge data having a unique identifier partially identical to the unique identifier of the data with the data, so that only one piece of data having the partially identical unique identifier is kept.
